# EUROPÄISCHE PATENTSCHRIFT

(11) **EP 0 738 555 B1**
(45) Veröffentlichungstag und Bekanntmachung des Hinweises auf die Patenterteilung: **31.03.1999**
(21) Anmeldenummer: 96104035.9
(22) Anmeldetag: 14.03.1996
(51) Int. Cl.: B23B 51/00

(54) **Bohrvorrichtung zur Herstellung von Bohrlöchern mit Hinterschneidung**
Drilling device for making undercut holes
Dispositif de perçage pour trous avec chambrage

(30) Priorität: 19.04.1995 DE 19514379
(43) Veröffentlichungstag der Anmeldung: 23.10.1996
(73) Patentinhaber: fischerwerke Artur Fischer GmbH & Co. KG, D-72178 Waldachtal (DE)
(72) Erfinder: Erath, Herbert, 72178 Waldachtal (DE); Bläse, Armin, 72160 Horb-Altheim (DE)

(56) Entgegenhaltungen:
- EP-A- 0 484 647
- EP-A- 0 529 238
- EP-A- 0 568 786

## Beschreibung

Die Erfindung betrifft eine Bohrvorrichtung zur Herstellung von Bohrlöchern mit Hinterschneidung gemäß dem Oberbegriff des Anspruchs 1.

Bohrlöcher mit Hinterschneidung in Fassadenplatten oder dgl. werden zu deren Befestigung mittels Spreizdübeln benötigt. Die Hinterschneidungen müssen sehr exakt ausgeführt werden, damit beim Einsetzen und Aufspreizen eines Spreizdübels kein zu hoher Spreizdruck entsteht, der zum Abplatzen eines Teils der Fassadenplatte führen könnte.

Bekannte Bohrvorrichtungen weisen eine Antriebseinrichtung, die das Bohrwerkzeug zur Erzeugung einer Schneidbewegung rotierend antreibt, eine Vorschubeinrichtung, die ein Bohrwerkzeug in eine Fassadenplatte oder dgl., also in ein Werkstück hineinbewegt und eine Auslenkeinrichtung, mit der das Bohrwerkzeug zur Herstellung der Hinterscheidung in radialer Richtung ausgelenkt wird, nachdem das Bohrloch in seiner vollen oder zumindest einem Teil seiner Tiefe zylindrisch gebohrt worden ist, auf.

Aus der DE 43 30 058 A1 ist eine derartige Bohrvorrichtung bekannt, die die Herstellung eines Bohrlochs mit einer exakt ausgeführten Hinterschneidung durch automatisches, maschinengesteuertes Verschwenken eines Bohrwerkzeugs gegen eine Rotationsachse ermöglicht. Dazu wird ein Bohrerhalter, der in einer hohlen, rotierend antreibbaren Bohrspindel gehalten ist, um einen kleinen Winkel in Bezug auf die Rotationsachse verschwenkt, nachdem der zylindrische Teil des Bohrlochs gebohrt worden ist. Auf diese Weise vollführt der Bohrerhalter zusammen mit einem in ihn eingespannten Bohrwerkzeug eine Präzessionsbewegung, d. h. die Achse von Bohrerhalter und Bohrwerkzeug kreist auf einer Kegelmantelfläche. Die Umlaufgeschwindigkeit der Präzessionsbewegung entspricht der Rotationsgeschwindigkeit der Bohrspindel.

Bei der bekannten Bohrvorrichtung ist es wichtig, daß eine Schneide des Bohrwerkzeugs wahrend der Präzessionsbewegung in radialer Richtung nach außen absteht, d. h. sie muß von dem vom Bohrwerkzeug beschriebenen Präzessionskegel nach außen weisen. Dies ist erforderlich, um einen Materialabtrag in der Fassadenplatte oder dgl. durch die Bohrwerkzeugsschneide zu erzielen. Eine nicht nach außen stehende Schneide des Bohrwerkzeugs kommt bei mit dem Bohrerhalter verschwenktem Bohrwerkzeug nicht mit dem Material der Fassadenplatte oder dgl. in Berührung. Es ist also eine Winkelausrichtung des Bohrwerkzeugs in Bezug auf die Schwenkrichtung des Bohrerhalters in der Bohrspindel erforderlich. Darüber hinaus wird bei der Herstellung der Hinterschneidung nur eine Schneide des Bohrwerkzeugs beund abgenutzt.

Der Erfindung liegt daher die Aufgabe zugrunde, eine Bohrvorrichtung zur Herstellung von Bohrlöchern mit Hinterschneidung zu schaffen, bei der die Rotationsbewegung eines Bohrwerkzeugs von dessen Präzessionsbewegung zur Herstellung der Hinterschneidung entkoppelt ist.

Diese Aufgabe wird ausgehend von einer Bohrvorrichtung der eingangs genannten Art durch die kennzeichnenden Merkmale des Anspruchs 1 gelöst.

Bei der erfindungsgemäßen Bohrvorrichtung rotiert die Auslenkeinrichtung nicht mit dem Bohrwerkzeug mit, sondern führt eine Präzessionsbewegung mit eigener, vorzugsweise wesentlich langsamerer Umlaufgeschwindigkeit aus. Dabei erfolgt mindestens ein vollständiger Umlauf mit voll ausgelenktem Bohrwerkzeug. Dies hat den Vorteil, daß die Schneidgeschwindigkeit unabhängig von der Präzessionsgeschwindigkeit gewählt werden kann. Des weiteren werden bei der Herstellung der Hinterschneidung alle Schneiden des Bohrwerkzeugs zum Materialabtrag verwendet, so daß die Schneiden gleichmäßig abgenutzt werden. Die Verwendung sämtlicher Schneiden ermöglicht zusätzlich eine höhere Schneidleistung.

Des weiteren ermöglicht die Erfindung es, eine Schwenkachse für die Auslenkung des Bohrwerkzeugs nahe an ein zu bearbeitendes Werkstück zu legen. Auf diese Weise befindet sich die Spitze des Präzessionskegels, der vom ausgelenkten Bohrwerkzeug bei der Herstellung der Hinterschneidung beschrieben wird, dicht an einer Oberfläche des Werkstücks. Dies hat den Vorteil, daß der zylindrische Teil des Bohrlochs bei der Herstellung der Hinterschneidung nicht oder nur gering aufgeweitet wird.

Die Erfindung weist eine Schwenkeinheit auf, die zur Herstellung der Hinterschneidung aus Ihrer Mittellage ausgelenkt wird, nachdem der zylindrische Teil des Bohrlochs in voller oder zumindest einem Teil seiner Tiefe gebohrt worden ist. Die Auslenkung ist eine Schwenkbewegung um einen kleinen Winkel bezüglich einer Mittellängsachse der Bohrvorrichtung.

Zusätzlich zur Auslenkung wird die Schwenkeinheit um die Mittellängsachse der Bohrvorrichtung gedreht, und zwar um mindestens eine volle Umdrehung, nachdem die volle Auslenkung erreicht ist, um die Hinterschneidung herzustellen. Durch das Verdrehen der ausgelenkten Schwenkeinheit beschreibt das Bohrwerkzeug eine Präzessionsbewegung. Zum Verdrehen wird die Verschiebebewegung genutzt, die auch zum Auslenken dient: Mittels eines Spindelgetriebes wird die Verschiebung in eine Drehung umgesetzt. Zu diesem Zweck kann entweder eine Spindel oder eine Spindelmutter des Spindelgetriebes verschoben und dadurch das jeweils andere Teil, also die Spindelmutter oder die Spindel, verdreht werden. Das drehende Teil des Spindelgetriebes ist drehfest mit der Schwenkeinheit verbunden. Auf diese Weise wird eine Verschiebebewegung in eine Schwenk- und eine Drehbewegung umgesetzt, so daß zur Verstellung der Hinterschneidung ausschließlich eine geradlinige Antriebsbewegung notwendig ist.

Bei einer Ausgestaltung der Erfindung wird die Auslenkung mittels einer Steuerfläche eines Auslenkblocks bewirkt, der in Vorschubrichtung der Bohrvorrichtung verschoben wird und dabei die Schwenkeinheit aus ihrer Mittellage auslenkt. Mit der Schwenkeinheit ist eine Aufnahme für das Bohrwerkzeug biegefest verbunden, d. h. dieses führt gemeinsam mit der Schwenkeinheit die Schwenkbewegung durch.

Bei einer Ausgestaltung der Erfindung wird die Auslenk- und die Präzessionsbewegung mittels eines Tiefenanschlags ausgelöst, der bei Erreichen einer eingestellten Bohrtiefe auf das Werkstück aufsetzt. Dies ist beispielsweise mittels einer Steuerung möglich, die beim Aufsetzen des Tiefenanschlags den Vorschub ausschaltet und die Auslenkeinrichtung in Gang setzt.

Bei einer Weiterbildung der Erfindung rastet der Tiefenanschlag beim Aufsetzen auf das Werkstück einen Mitnehmer aus, welcher die Auslenkeinrichtung an einem Parallelsupport verriegelt, der die Vorschubbewegung vollführt.

Durch das Ausrasten des Mitnehmers werden die Auslenkeinrichtung und der Parallelsupport voneinander gelöst. Die von der Vorschubeinrichtung erzeugte Verschiebebewegung wird, wie oben beschrieben, in eine Auslenk- und Drehbewegung der Schwenkeinrichtung umgesetzt. Ein Vorschub findet nach Aufsetzen des Tiefenanschlags nicht mehr statt. Die Schwenkeinrichtung mit dem Tiefenanschlag wird von einer sich am Parallelsupport abstützenden Feder in Anlage am Werkstück gehalten.

Um die Reibung zu minimieren, ist das Spindelgetriebe vorzugsweise als Kugelumlaufgetriebe ausgebildet, bei dem Kugeln, die in wendelförmigen Rillen der Gewindespindel abrollen können, den Formschluß zur Gewindemutter herstellen. Die Rückführung aus der Spindelmutter austretender Kugeln zu anderen Seiten der Spindelmutter erfolgt mittels eines Kugelführungsrohres, so daß sich die Kugeln in einem endlosen Kreislauf bewegen.

Die Erfindung wird nachfolgend anhand eines in der Zeichnung dargestellten Ausführungsbeispiels näher erläutert. Es zeigen:
- Figur 1: eine erfindungsgemäße Bohrvorrichtung in ihrer Grundstellung; und
- Figur 2: die Bohrvorrichtung aus Figur 1 mit ausgelenkter Schwenkeinheit.

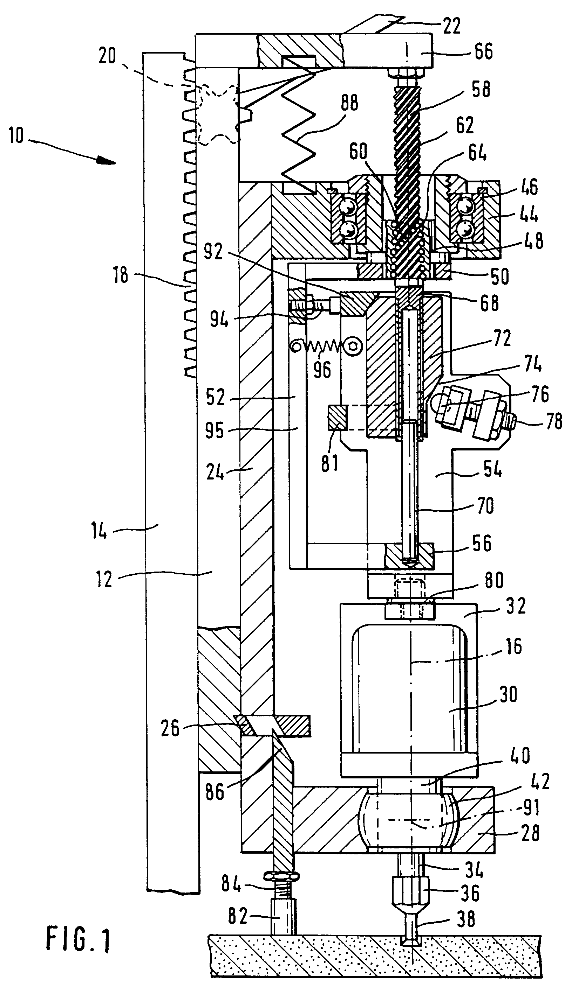

Die in Figur 1 dargestellte, erfindungsgemäße, insgesamt mit 10 bezeichnete Bohrvorrichtung weist einen Parallelsupport 12 auf, der an einer Säule 14 mit einer Schwalbenschwanzführung, einer Stangenführung oder dgl. in Richtung einer Mittellängsachse 16 verschiebbar gehalten ist. Die Säule 14 ist über einen Längsabschnitt mit einer Verzahnung 18 versehen. Mit dieser Verzahnung 18 kämmt ein Zahnrad 20, das am Parallelsupport 12 drehbar gelagert ist. Mit dem Zahnrad 20 ist ein Handhebel 22 drehfest verbunden.

Durch Betätigung dieses Handhebels 22 wird der Vorschub der erfindungsgemäßen Bohrvorrichtung 10 - und auch deren Rückbewegung in die Ausgangsstellung - in Richtung der Mittellängsachse 16 bewerkstelligt. Auf diese Weise läßt sich eine zylindrische Bohrung in einem Werkstück, beispielsweise in einer Fassadenplatte oder dgl. anbringen.

Am Parallelsupport 12 ist ein Schlitten 24 mit einer Schwalbenschwanzführung (nicht sichtbar) parallel zur Verschiebrichtung des Parallelsupports 12 an der Säule 14 verschiebbar gelagert. Ein Mitnehmer 26 des Schlittens 24 greift in den Parallelsupport 12 ein, so daß sich der Schlitten 24 mit dem Parallelsupport 12 mitbewegt.

An einem kurzen Querträger 28 am in Vorschubrichtung vorderen Ende des Schlittens 24 ist ein Elektromotor 30 mit einem Motorträger 32 angebracht. Der Elektromotor 30 dient zum rotierenden Antrieb einer Bohrwelle 34, die durch den Querträger 28 des Schlittens 24 hindurchragt. Die Bohrwelle 34 weist eine Spannvorrichtung 36 auf, in der ein Bohrwerkzeug 38 eingespannt ist. Die Rotation der Bohrwelle 34 bewirkt die Schnittbewegung des Bohrwerkzeugs 38. Der Elektromotor 30 ist drehfest bzgl. der Mittellängsachse 16 am Querträger 28 angebracht.

Mittels eines Kugelgelenks ist der Elektromotor 30 schwenkbar zur Mittellängsachse 16 der Bohrvorrichtung 10 am Querträger 28 angebracht: Auf einem Flansch 40 des Elektromotors 30 ist ein Ring 42 mit sphärischer Außenoberfläche angebracht, der in eine komplementär geformte Bohrung im Querträger 28 eingesetzt ist.

Am zweiten, dem Bohrwerkzeug 38 abgewandten Ende des Schlittens 24 ist ein zweiter Querträger 44 angebracht, in den ein Spindelgetriebe eingesetzt ist: Mittels eines zweireihigen Schrägkugellagers 46 ist eine Spindelmutter 48 drehbar im zweiten Querträger 44 gelagert. Die Achse der Spindelmutter 48 stimmt mit der Mittellängsachse 16 der erfindungsgemäßen Bohrvorrichtung 10 überein. Die Spindelmutter 48 ist drehfest in einen Schenkel 50 eines Bügels 52 eingesetzt, der eine Schwenkplatte 54 seitlich umgreift. An einem zweiten Schenkel 56 des Bügels 52 liegt die Schwenkplatte 54 seitlich an, so daß die Schwenkplatte 54 mit dem Bügel 52 und über diesen mit der Spindelmutter 48 drehfest verbunden ist.

Durch die Spindelmutter 48 verläuft eine Gewindespindel 58 hindurch, die ebenfalls Bestandteil des Spindelgetriebes ist. Das Spindelgetriebe ist als Kugelumlaufgetriebe ausgebildet, in dem Kugeln 60 einen Formschluß zwischen der Spindel 58 und der Spindelmutter 48 bewirken: Die Kugeln 60 laufen in als Steilgewinde ausgebildeten Rillen 62, 64 der Gewindespindel 58 und der Spindelmutter 48 um. Die Rückführung an einem Ende aus der Spindelmutter 48 austretender Kugeln 60 zum anderen Ende der Spindelmutter 48 bewirkt ein in der Zeichnung nicht sichtbares Kugelführungsrohr, so daß die Kugeln 60 in geschlossenem Kreislauf umlaufen.

Die Spindel 58 ist mit einem Ausleger 66 des Parallelsupports 12, der sich außerhalb des zweiten Querträgers 44 des Schlittens 24 befindet, verschraubt, sie läßt sich also nicht verdrehen.

Die Spindel 58 setzt sich durch die Spindelmutter 48 hindurch einstückig in einen hohlgebohrten Zylinderabschnitt 68 fort. Dieser hohlgebohrte Zylinderabschnitt 68 ist auf einem Stift 70 geführt, der in den zweiten, der Spindelmutter 48 abgewandten und dem Elektromotor 30 zugewandten Schenkel 56 des Bügels 52 eingesetzt ist. Auf dem Zylinderabschnitt 68 ist ein Auslenkblock 72 drehbar, jedoch in axialer Richtung gegenüber der Spindel 58 unverschiebbar gehalten. Die Spindel 58, der Bügel 52, der Führungsstift 70 und der Auslenkblock 72 verbleiben stets axial zur Mittellängsachse 16 der erfindungsgemäßen Bohrvorrichtung 10 ausgerichtet.

Der Auslenkblock 72 weist eine Schrägfläche als Steuerfläche 74 auf, deren Abstand von der Mittellängsachse 16 der Bohrvorrichtung 10 sich in Richtung der Spindelmutter 48 vergrößert. Die Steuerfläche 74 ist zum Angriff einer Topfrolle 76 vorgesehen, die an der Schwenkplatte 54 angebracht ist. Die Topfrolle 76 weist einen Gewindestift 78 auf, mit dem ihr radialer Abstand von der Steuerfläche 74 einstellbar ist.

Die Schwenkplatte 54 ist über ein Drehgelenk 80 biegesteif mit der Motoraufnahme 32 verbunden, d. h. bei einer Auslenkung der Schwenkplatte 54 in radialer Richtung wird diese Zusammen mit dem Elektromotor 30 um das Kugelgelenk 42 verschwenkt. Eine Drehbewegung der Schwenkplatte 54 um eine Mittelachse des Elektromotors 30, die in der Figur 1 dargestellten Ausgangsstellung der erfindungsgemäßen Bohrvorrichtung 10 mit der Mittellängsachse 16 übereinstimmt, ist durch das Drehgelenk 80 möglich.

Zusätzlich zum Führungsstift 70 des Bügels 52 weist die Schwenkplatte 54 einen gegabelten Gegenhalter 81 auf, der den Auslenkblock 72 an dessen Seiten umgreift und dadurch den Auslenkblock 72 in seitlicher Richtung quer zu einer Auslenkrichtung an der Schwenkplatte 54 fixiert.

Die erfindungsgemäße Bohrvorrichtung 10 funktioniert wie folgt: Nach dem Einschalten des Elektromotors 30 wird der Handhebel 22 niedergedrückt und dadurch eine Vorschubbewegung des Parallelsupports 12 bewirkt. Der mit dem Parallelsupport 12 über den Riegel 26 verriegelte Schlitten 24 bewegt sich mit dem Parallelsupport 12 mit, wodurch das Bohrwerkzeug 38 die Vorschubbewegung des Parallelsupports 12 in Richtung der Mittellängsachse 16 der erfindungsgemäßen Bohrvorrichtung mitmacht. Auf diese Weise wird ein zylindrisches Bohrloch erzeugt.

Bei Erreichen einer einstellbaren Bohrlochtiefe setzt ein Tiefenanschlag 82 auf ein nicht dargestelltes Werkstück, beispielsweise eine Fassadenplatte oder dgl. auf. Zur Einstellung der Bohrlochtiefe ist der Tiefenanschlag 82 mit einem Gewinde 84 versehen. Der auf dem Werkstück aufsitzende Tiefenanschlag 82 bewegt sich relativ zum weiterbewegten Parallelsupport 12 und Schlitten 24. Dabei zieht eine schräge Ausrückfläche 86 den Riegel 26 außer Eingriff von dem Parallelsupport 12. Der Schlitten 24, der sich über den Tiefenanschlag 82 gegen das Werkstück abstützt, verbleibt bei der Weiterbewegung des Parallelsupports 12 in dem durch den Tiefenanschlag 82 eingestellten Abstand vom Werkstück. Eine sich gegen den Ausleger des Parallelsupports 66 abstützende Schraubendruckfeder 88 hält den Schlitten 24 in diesem Abstand zum Werkstück. Das Bohrwerkzeug 38 bewegt sich in axialer Richtung nicht mehr weiter.

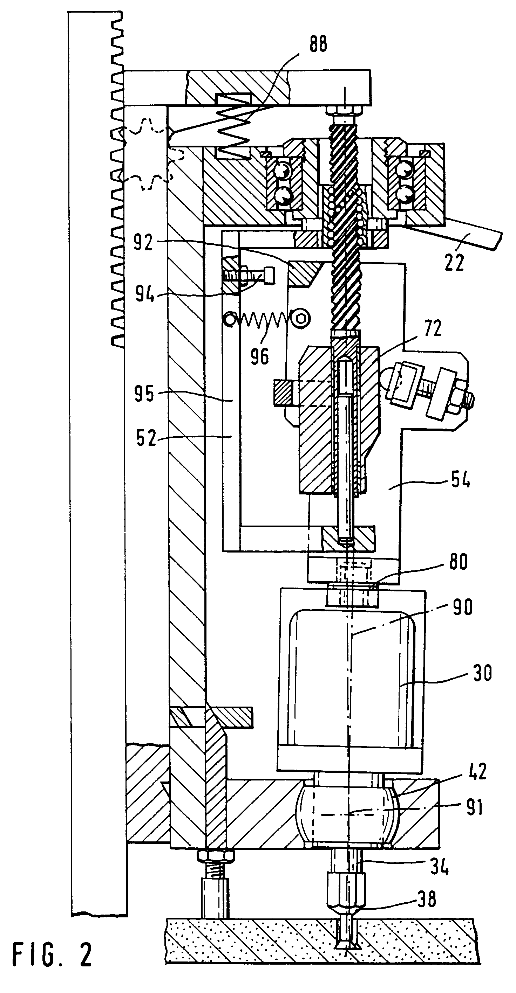

Durch die Weiterbewegung des Parallelsupports 12 in Vorschubrichtung wird die an ihm angebrachte Spindel 58 in Richtung der Mittellängsachse 16 der erfindungsgemäßen Bohrvorrichtung 10 auf das Werkstück zubewegt. Mit der Spindel 58 verschiebt sich der Auslenkblock 72, die Topfrolle 76 gelangt in Anlage an dessen Steuerfläche 74 und wird radial von der Mittellängsachse 16 weggedrückt. Mit der Topfrolle 76 wird die Schwenkplatte 54 ebenfalls von der Mittellängsachse 16 weggedrückt. Dadurch vollführt die Schwenkplatte 54 zusammen mit dem Elektromotor 30, mit dessen Motoraufnahme 32 sie biegesteif verbunden ist, eine Schwenkbewegung um das Kugelgelenk 42, das Bohrwerkzeug 38 wird um einen Schwenkwinkel bezüglich der Mittellängsachse 16 ausgelenkt (Figur 2). Die Größe des Schwenkwinkels wird mittels des Gewindezapfens 78 der Topfrolle 76 eingestellt.

Durch die Verschiebung der Spindel 58 wird die Spindelmutter 48 und mit ihr zusammen der Bügel 52 und die Schwenkplatte 54 in Drehung versetzt (in Figur 2 sind der Anschaulichkeit wegen der Bügel 52 und die Schwenkplatte 54 unverdreht dargestellt). Durch diese der Auslenkung überlagerte Drehung vollführt die Schwenkplatte 54 zusammen mit dem Elektromotor 30 und dem in die Bohrwelle 34 eingespannten Bohrwerkzeug 38 eine Präzessionsbewegung, d. h. die Mittelachse 90 des Elektromotors 30 (Figur 2), die zugleich Rotationsachse des Bohrwerkzeugs 38 ist, bewegt sich auf einem Präzessionskegel, dessen Spitze mit einem Drehpunkt 91 des Kugelgelenks 42 übereinstimmt. Dabei ist der Verschiebeweg der Spindel 58 in der Spindelmutter 48 so lang bemessen, daß noch ein vollständiger Präzessionsumlauf stattfindet, nachdem das Bohrwerkzeug 38 voll ausgelenkt worden ist. Auf diese Weise wird eine Hinterschneidung der Bohrung hergestellt.

Da der Elektromotor 30 über das Drehgelenk 80 von der Drehung der Schwenkplatte 54 entkoppelt ist, dreht er sich nicht mit dieser mit. Die Schnittgeschwindigkeit des Bohrwerkzeugs 38 wird im wesentlichen von dessen Rotationsgeschwindigkeit und seinem Durchmesser bestimmt, die Präzessionsbewegung verläuft wesentlich langsamer.

Die Rückbewegung der erfindungsgemäßen Bohrvorrichtung 10 in ihre in Figur 1 dargestellte Ausgangslage erfolgt in umgekehrter Reihenfolge, wobei die Feder 88 zunächst ein Rückstellen der ausgeschwenkten Teile 54, 30, 34, 38 in ihre Mittellage bewirkt. Ein auf der Schwenkplatte 54 angebrachter Keil 92 legt die Ausgangsstellung des Auslenkblocks 72 fest. Die Mittellage der Schwenkplatte 54 ist mit einer Stellschraube 94, welche in ein Joch 95 des Bügels 52 eingeschraubt ist, einstellbar. Eine am Joch 95 und an der Schwenkplatte 54 angreifende Zugschraubenfeder 96 zieht die Schwenkplatte 54 aus ihrer ausgelenkten Stellung in ihre Mittellage zurück.

## Patentansprüche

1. Bohrvorrichtung zur Herstellung von Bohrlöchern mit Hinterschneidung, insbesondere in Fassadenplatten aus Stein, Keramik, Beton oder dgl., mit einer Vorschubeinrichtung, mit einer Antriebseinrichtung und mit einer Auslenkeinrichtung, die eine Schwenkeinheit aufweist, welche mit einer Aufnahme (36) für ein Bohrwerkzeug (38) biegefest verbunden ist und nahe der Aufnahme (36) um einen Schwenkpunkt (91) schwenkbar gelagert ist, **dadurch gekennzeichnet,** daß die Auslenkeinrichtung zusätzlich ein Spindelgetriebe großer Gewindesteigung aufweist, daß entweder eine Spindel (58) oder eine Spindelmutter (48) des Spindelgetriebes in Richtung einer Längsmittelachse (16) der Bohrvorrichtung (10) verschiebbar ist und bei einer Vorwärtsverschiebung die Schwenkeinheit über einen Auslenkmechanismus aus deren Mittellage verschwenkt, daß die Spindelmutter (48) bzw. die Spindel (58), die durch die Verschiebung der Spindel (58) bzw. der Spindelmutter (48) in eine Drehbewegung versetzt wird, drehfest mit der Schwenkeinheit verbunden ist, und daß die Verschiebung nach Erreichen der vollen Auslenkung mindestens eine Gewindesteigung beträgt.

2. Bohrvorrichtung nach Anspruch 1, **dadurch gekennzeichnet,** daß die Auslenkeinrichtung einen Auslenkblock (72) mit einer Steuerfläche (74) aufweist, der drehbar und in axialer Richtung gegenüber der Spindel (58) unverschiebbar auf einem Spindelfortsatz (68) gelagert ist, und daß die Schwenkeinheit ein Auslenkelement (76) aufweist, das bei der Verschiebung der Spindel (58) an der Steuerfläche (74) angreift und die Schwenkeinheit auslenkt.

3. Bohrvorrichtung nach Anspruch 1, **dadurch gekennzeichnet,** daß die Bohrvorrichtung (10) einen Tiefenanschlag (82) aufweist, der beim Aufsetzen auf einem Bohrstück die Auslenkbewegung der Auslenkeinrichtung auslöst.

4. Bohrvorrichtung nach Anspruch 3, **dadurch gekennzeichnet,** daß die Vorschubeinrichtung (18, 20, 22) an einem in Vorschubrichtung beweglichen Parallelsupport (12) angreift, an dem die Auslenkeinrichtung in Vorschubrichtung verschiebbar geführt ist, daß die Spindel (58) bzw. die Spindelmutter (48) mit dem Parallelsupport (12) verbunden ist, daß ein lösbarer Riegel (26) die Auslenkeinrichtung mit dem Parallelsupport (12) verriegelt, daß der Tiefenanschlag (82) beim Aufsetzen auf dem Bohrstück den Riegel (26) außer Eingriff bringt, und daß ein starkes Federelement (88), das sich gegen den Parallelsupport (12) abstützt, die Auslenkeinrichtung in Anlage an dem Bohrstück hält.

5. Bohrvorrichtung nach Anspruch 1, **dadurch gekennzeichnet,** daß die schwenkbare Lagerung der Schwenkeinheit ein Kugelgelenk aufweist.

6. Bohrvorrichtung nach Anspruch 5, **dadurch gekennzeichnet,** daß das Kugelgelenk einen Ring (42) mit sphärischer Außenoberfläche aufweist.

7. Bohrvorrichtung nach Anspruch 1**, dadurch gekennzeichnet,** daß das Spindelgetriebe ein Kugelumlaufgetriebe ist.

## Claims

1. A drilling device for producing drilled holes with an undercut, in particular in facing panels of stone, ceramics, concrete or similar materials, having a forward feed device, a drive device and an outward displacement device which comprises a swivel unit that has a flexing-resistant connection to a chuck (36) for a drilling tool (38) and close to the chuck (36) is mounted so as to swivel about a pivot point (91), **characterized in that** the outward displacement device additionally comprises a lead screw gear unit with a coarse thread pitch, in that either a lead screw (58) or a lead screw nut (48) of the lead screw gear unit is displaceable in the direction of a longitudinal centre line (16) of the drilling device (10) and upon a forward feed displacement the swivel unit is swivelled from its central position by means of an outward displacement mechanism, in that the lead screw nut (48) or the lead screw (58), which is caused to rotate by the displacement of the lead screw (58) or the lead screw nut (48) respectively, is joined to the swivel unit so that they rotate together, and in that the displacement after the full outward displacement has been reached amounts to at least one thread pitch.

2. A drilling device according to claim 1, **characterized in that** the outward displacement device comprises a displacement block (72) having a cam face (74), which block is mounted on an extension (68) of the lead screw so that it is rotatable and so that it cannot be displaced in the axial direction with respect to the lead screw (58), and in that the swivel unit comprises a displacement element (76) which during the displacement of the lead screw (58) acts on the cam face (74) and displaces the swivel unit outwards.

3. A drilling device according to claim 1, **characterized in that** the drilling device (10) has a depth stop (82) which initiates the outward displacement movement of the displacement device when it comes into contact with a workpiece to be drilled.

4. A drilling device according to claim 3, **characterized in that** the forward feed device (18, 20, 22) acts on a parallel support (12) movable in the forward feed direction, on which parallel support the outward displacement device is slidably guided in the forward feed direction, in that the lead screw (58) or the lead screw nut (48) is connected to the parallel support (12), in that a releasable locking bar (26) locks the outward displacement device to the parallel support (12), in that the depth stop (82), when it comes into contact with the workpiece for drilling, decouples the locking bar (26), and in that a strong spring element (88) which bears against the parallel support (12) holds the outward displacement device in engagement with the workpiece for drilling.

5. A drilling device according to claim 1, **characterized in that** the swivel bearing of the swivel unit comprises a ball-and-socket joint.

6. A drilling device according to claim 5, **characterized in that** the ball-and-socket joint comprises a ring (42) having a spherical outer surface.

7. A drilling device according to claim 1, **characterized in that** the lead screw gear unit comprises a recirculating ball gear unit.

## Revendications

1. Dispositif de perçage pour réaliser des trous présentant un chambrage, en particulier dans des panneaux de façade en pierre, céramique, béton ou analogues, comportant un mécanisme d'avance, un mécanisme d'entraînement et un mécanisme de déviation qui présente un organe pivotant qui est relié, avec résistance à la flexion, à un porte-outil (36) pour un outil de perçage (38) et qui est porté, près du porte-outil (36) avec liberté de pivotement autour d'un centre de pivotement (91), caractérisé par le fait que le mécanisme de déviation présente en outre un mécanisme à vis sans fin à grand pas de vis, que soit une vis sans fin (58) soit un écrou à vis sans fin (48) du mécanisme à vis sans fin peut coulisser selon la direction d'une axe longitudinal médian (16) du dispositif de perçage (16) et que, lors d'un coulissement vers l'avant, l'organe pivotant pivote hors de sa position médiane par l'intermédiaire d'un mécanisme de pivotement, que l'écrou à vis sans fin (48) ou la vis sans fin (58), qui, du fait du coulissement de la vis sans fin (58) ou de l'écrou à vis sans fin (48), est entraîné en un mouvement de rotation, et relié, sans liberté de rotation relative, à l'organe pivotant, et qu'une fois atteint le pivotement complet, le coulissement vaut au moins un pas de la vis sans fin.

2. Dispositif de perçage selon la revendication 1, caractérisé par le fait que le mécanisme de déviation présente un bloc de déviation (72) qui est porté sur un prolongement (38) de la vis sans fin avec liberté de rotation relative et sans liberté de coulissement, selon la direction axiale, par rapport à la vis sans fin (58), et que l'organe pivotant présente un élément de déviation (72) qui, lors du coulissement de la vis sans fin (58), vient en prise contre la surface de commande (74) et dévie l'organe pivotant.

3. Dispositif de perçage selon la revendication 1, caractérisé par le fait que le dispositif de perçage (10) présente une butée de profondeur (82) qui, lors de la pose sur une pièce à percer, déclenche le mouvement de déviation du mécanisme de déviation.

4. Dispositif de perçage selon la revendication 3, caractérisé par le fait que le mécanisme d'avance (18, 20, 22) intervient sur un support parallèle (12) qui est mobile selon la direction d'avance et sur lequel le mécanisme de déviation est guidé avec liberté de coulissement selon la direction d'avance, que la vis sans fin (58) ou l'écrou à vis sans fin (48) est relié au support parallèle (12), qu'un écrou (26) déverrouillable, verrouille le mécanisme de déviation avec le support parallèle (12), que, lors de la pose sur la pièce à percer, la butée de profondeur (82) déverrouille le verrou (26), et qu'un puissant élément élastique (88), qui s'appuie contre le support parallèle (12), maintient le mécanisme de déviation en appui contre la pièce à percer.

5. Dispositif de perçage selon la revendication 1, caractérisé par le fait que la portée pivotante de l'organe pivotant présente une articulation sphérique.

6. Dispositif de perçage selon la revendication 5, caractérisé par le fait que l'articulation sphérique présente une bague (42) à surface extérieure sphérique.

7. Dispositif de perçage selon la revendication 1, caractérisé par le fait que le mécanisme à vis sans fin est un mécanisme épicycloïdal à billes.
